# EUROPEAN PATENT SPECIFICATION

(11) **EP 3 096 164 B1**
(45) Date of publication and mention of the grant of the patent: **02.04.2025**
(21) Application number: 14878417.6
(22) Date of filing: 20.08.2014
(51) Int. Cl.: G02B 6/42, H04B 10/25, G02B 6/34

(54) **OPTICAL COUPLING DEVICE AND OPTICAL COUPLING UNIT**
OPTISCHE KUPPLUNGSVORRICHTUNG UND OPTISCHE KUPPLUNGSEINHEIT
DISPOSITIF DE COUPLAGE OPTIQUE ET UNITÉ DE COUPLAGE OPTIQUE

(30) Priority: 16.01.2014 CN 201420027992 U
(43) Date of publication of application: 23.11.2016
(73) Proprietor: ZTE Corporation, Shenzhen, Guangdong 518057 (CN); Shanghai University, Shanghai 200444 (CN)
(72) Inventor: PANG, Fufei, Shenzhen Guangdong 518057 (CN); WANG, Tingyun, Shanghai 200444 (CN); XIA, Qian, Shenzhen Guangdong 518057 (CN); CHEN, Shiqiong, Shenzhen Guangdong 518057 (CN); ZHANG, Renwu, Shenzhen Guangdong 518057 (CN); GU, Xin, Shenzhen Guangdong 518057 (CN); ZHAO, Li, Shenzhen Guangdong 518057 (CN); LIU, Zhe, Shenzhen Guangdong 518057 (CN); WANG, Yu, Shenzhen Guangdong 518057 (CN)
(74) Representative: Novagraaf Technologies
(86) International application number: PCT/CN2014/084811
(87) International publication number: WO 2015/106567

(56) References cited:
- WO-A1-03/010579
- CN-A- 1 735 826
- CN-A- 1 751 256
- CN-A- 102 436 038
- GB-A- 2 312 527
- JP-A- H0 488 308
- US-A1- 2002 096 686
- US-A1- 2003 185 506
- US-A1- 2006 164 738
- US-A1- 2013 266 262

## Description

### Technical Field

The present disclosure relates to the field of optical communications, and in particular to an optical coupling device and an optical coupling unit.

### Background

As requirements for interconnection bandwidths between printed circuit boards and between chips in the application fields (broadband communication networks, super computers, big data centres and the like) are continuously increased, bottlenecks of an electrical interconnection technology based on a printed circuit board gradually emerge on a transmission rate. Particularly, for medium and short distances (0.3m to 1m), electrical interconnection may merely achieve 10Gbps-rate transmission mostly, and interconnection at a high speed such as 25Gbps, 40Gbps and the like has encountered the bottlenecks about the transmission rate. Consequently, the industry proposes that a copper wire used for connecting to form a circuit is replaced with an optical waveguide, and the optical waveguide is integrated on the printed circuit board to achieve optical interconnection between various circuit elements, so as to achieve high-speed data transmission. An optical interconnection method based on an optical waveguide has the advantages of high bandwidth, high density, high transmission speed, low transmission power consumption, low loss, basic avoidance of crosstalk, electromagnetic compatibility and the like. Thus, replacement of an electric printed backboard with an optical printed backboard based on an optical waveguide has become a general trend of high-speed and broadband interconnection development and is a core technology for solving the problem about interconnection bandwidths of the broadband communication networks, the super computers and the big data centres in the future.

In an interconnection optical waveguide system, there exist a great number of optical path transfer links, such as an optical path transfer between an optical source and an optical waveguide, an optical path transfer between an optical fibre and an optical waveguide and an optical path transfer between two optical waveguides. Therein, optical coupling efficiency is a most concerned factor as the magnitude of coupling efficiency will directly affect the insertion loss of an optical interconnection link, thereby causing shortening of an interconnection distance. Thus, an optical coupling related device plays an important role in the interconnection optical waveguide system, and is an important link for determining the performance of the interconnection system.

So far, there are many methods for implementing the optical coupling related device. However, there is not a standard solution for vertically optical coupling of an interconnection optical waveguide.

Documents US 2003/185506, US 2013/083802 A1, JP H04 88308 A and US 2002/096686 A1 provide related technical solutions, however, the above mentioned problem still remains unsolved.

### Summary

In order to solve the technical problems existing currently, the embodiments of the present disclosure provide an optical coupling device and an optical coupling unit.

Aspects of the present invention are set out in the appended claims.

### Brief Description of the Drawings

Fig. 1 is a cross-section view of a right-angle reflecting prism in a related art;
Fig. 2 is a section view of an optical coupling device provided by at least one embodiment of the present disclosure;
Fig. 3 is a cross-section view of a mobile optical fibre connector provided by at least one embodiment of the present disclosure;
Fig. 4 is a three-dimensional structure diagram of a right-angle reflecting prism provided by at least one embodiment of the present disclosure;
Fig. 5 is a three-dimensional structure diagram of a double-path reflecting prism provided by at least one embodiment of the present disclosure;
Fig. 6 is a three-dimensional structure diagram of a single-row multi-path reflecting prism provided by at least one embodiment of the present disclosure;
Fig. 7 is a three-dimensional structure diagram of a multi-row multi-path reflecting prism provided by at least one embodiment of the present disclosure;
Fig. 8 is a flowchart of a method for manufacturing an optical coupling device provided by at least one embodiment of the present disclosure; the method is not part of the claimed invention;
Fig. 9 is a section view of an optical coupling unit provided by at least one embodiment of the present disclosure; and
Fig. 10 is a flowchart of a method for manufacturing an optical coupling unit provided by at least one embodiment of the present disclosure; the method is not part of the claimed invention.

### Detailed Description of the Embodiments

In at least one embodiment of the present disclosure, an optical coupling device including a mobile optical fibre connector and a right-angle reflecting prism is provided. A reflecting surface of the right-angle reflecting prism is provided with a curve reflecting surface, and the mobile optical fibre connector is fixed to the right-angle reflecting prism, so that rays propagated by an optical fibre are incident on the curve reflecting surface, thereby gathering and reflecting the rays propagated by the optical fibre. Thus, the loss of optical propagation can be reduced, and the optical coupling efficiency can be improved.

The present disclosure is further described below with reference to the drawings and specific embodiments in detail.

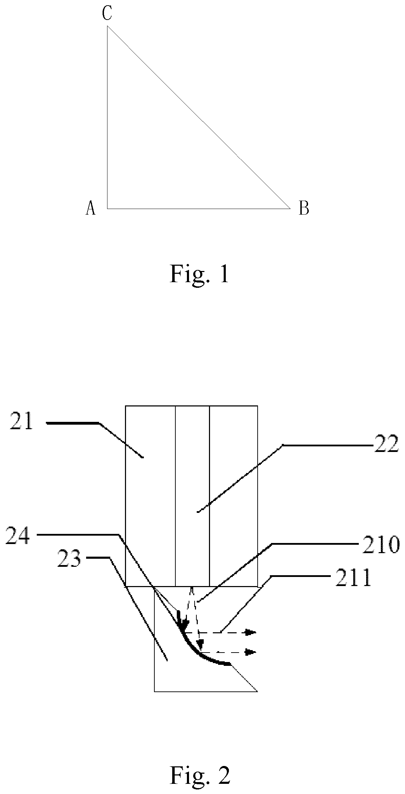

Fig. 1 is a cross-section view of a right-angle reflecting prism. In Fig. 1, two right-angle sides AB and AC represent two side surfaces, vertical to each other, on the right-angle reflecting prism, and BC represents a reflecting surface on the right-angle reflecting prism.

According to at least one embodiment of the present disclosure, an optical coupling device is provided. Fig. 2 is a section view of an optical coupling device according to an embodiment of the present disclosure. As shown in Fig. 2, the optical coupling device includes a mobile optical fibre connector 21 and a right-angle reflecting prism 23. A reflecting surface of the right-angle reflecting prism 23 is provided with a curve reflecting surface 24, and the curve reflecting surface 24 is configured to gather and reflect the rays incident on the curve reflecting surface 24; the mobile optical fibre connector 21 is fixed to the right-angle reflecting prism 23; and the mobile optical fibre connector 21 includes an optical fibre coupling tube 22, and the optical fibre coupling tube 22 is configured to fix and align an optical fibre, so that the rays propagated by the optical fibre are incident on the curve reflecting surface 24 of the right-angle reflecting prism 23.

In an example embodiment, the curve reflecting surface 24 is coated with a high-reflectivity optical thin film, the optical thin film on the curve reflecting surface 24 may be a gold thin film, a silver thin film or other metal thin films, or may be other medium thin films; the film-coated curve reflecting surface 24 can achieve higher reflectivity, thereby totally reflecting incident rays; and when the optical fibre is fixed inside the optical fibre coupling tube 22 in the mobile optical fibre connector 21, the incident rays transmitted by the optical fibre are incident on the curve reflecting surface 24 of the right-angle reflecting prism, and then the incident rays are reflected by the curve reflecting surface 24 coated with the high-reflectivity optical thin film.

In at least one embodiment of the present disclosure, the type and structure of the mobile optical fibre connector 21 are not specially required, and the type of the mobile optical fibre connector 21 includes (but not limited to): Mechanical Transfer Registered Jack (MT-RJ) or Multi-fibre Push On (MPO), which makes the optical coupling device provided by the embodiment of the present disclosure simple in structure and easy to implement.

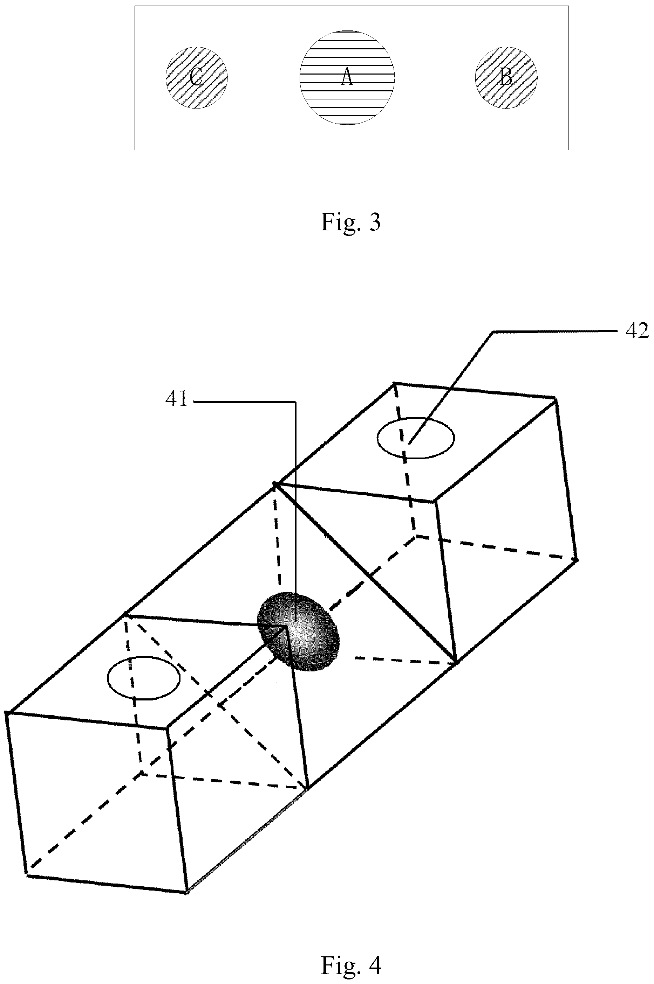

Fig. 3 is a cross-section view of a mobile optical fibre connector 21. A part A filled with transverse lines is a cross section of the optical fibre coupling tube 22, and part B and part C filled with oblique lines show two locating guide pin holes. Fig. 4 is a three-dimensional structure diagram of a right-angle reflecting prism 23 provided by at least one embodiment of the present disclosure. A mark 41 marks a position of the curve reflecting surface, and a mark 42 marks a position of a locating guide pin hole. In practical application, the number and positions of locating guide pin holes in the mobile optical fibre connector 21 and the right-angle reflecting prism 23 may be designed as required, and not limited to the structure provided by the embodiment of the present disclosure.

In practical application, a central position and interval of the curve reflecting surface 24 of the right-angle reflecting prism 23 is identical to a central position and interval of the optical fibre coupling tube 22 in the selected mobile optical fibre connector 21.

The diameter and position of the locating guide pin hole in the right-angle reflecting prism 23 is matched with the diameter and position of the locating guide pin hole in the selected mobile optical fibre connector 21, thereby better connecting the mobile optical fibre connector 21 to the right-angle reflecting prism 23 via the locating guide pin.

As shown in Fig. 2, the right-angle reflecting prism 23 is fixed to the surface of the mobile optical fibre connector 21, so that the rays transmitted by the optical fibre are exactly incident on the curve reflecting surface 24 of the right-angle reflecting prism 23 and are reflected by the curve reflecting surface 24.

In an example embodiment, the mobile optical fibre connector 21 being fixed to the right-angle reflecting prism 23 includes that: the right-angle reflecting prism 23 is connected to the mobile optical fibre connector 21 via the locating guide pin, the locating guide pin being connected to the locating guide pin holes in the right-angle reflecting prism 23 and the mobile optical fibre connector 21 respectively; and in addition, the right-angle reflecting prism 23 is fixed to the surface of the mobile optical fibre connector 21 via a ultraviolet glue, and the ultraviolet glue can be applied to a joint between the locating guide pin and the right-angle reflecting prism 23 and a joint between the locating guide pin and the mobile optical fibre connector 21; or can be applied to an area, connected to the mobile optical fibre connector 21, at an edge of the right-angle reflecting prism 23.

In practical application, a curvature of the curve reflecting surface 24 of the right-angle reflecting prism 23 can be designed according to a value of an aperture parameter of the optical fibre, and the curve reflecting surface 24 has a gathering function for light beams according to a principle of optical reflection. Thus, the curvature of the curve reflecting surface 24 of the right-angle reflecting prism 23 is designed to ensure that the rays incident to the right-angle reflecting prism 23 from the optical fibre at a maximum angle can be gathered by the curve reflecting surface 24 and then reflected in parallel; and the surface type of the reflecting surface optionally includes (but not limited to): a circular arc surface, a paraboloid and the like.

As shown in Fig. 2, after incident rays 210 transmitted by the optical fibre are totally reflected by the curve reflecting surface 24 of the right-angle reflecting prism, parallel reflected light 211 will be obtained due to the gathering function. Thus, an optical loss caused by the divergence of rays when a common reflecting prism is used can be reduced, thereby improving the optical coupling efficiency.

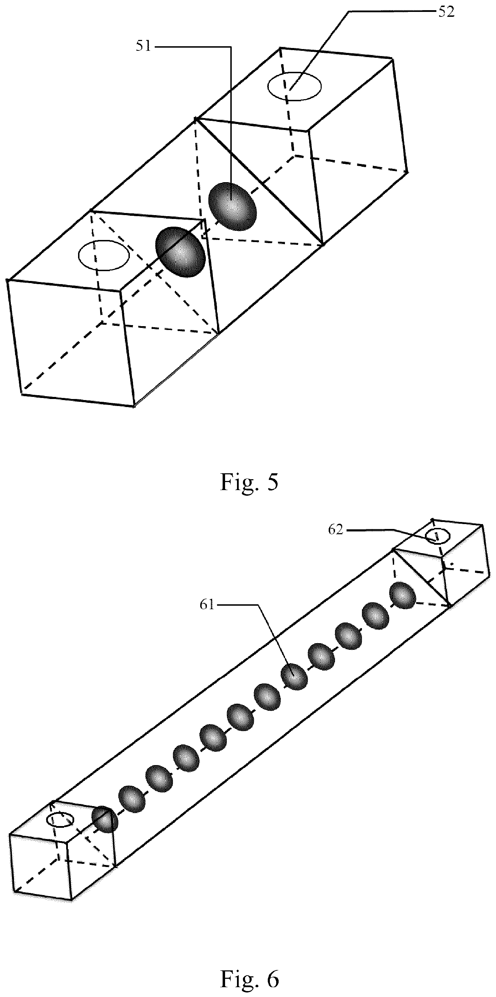

In at least one embodiment of the present disclosure, the right-angle reflecting prism may be a double-path reflecting prism. That is, the reflecting surface of the right-angle reflecting prism is provided with two curve reflecting surfaces. As shown in Fig. 5, mark 52 marks a locating guide pin hole, and mark 51 marks a curve reflecting surface. Correspondingly, the mobile optical fibre connector fixed to the double-path reflecting prism is a double-channel mobile optical fibre connector. That is, the mobile optical fibre connector is a mobile optical fibre connector including two optical fibre coupling tubes. Thus, two paths of rays can be reflected simultaneously.

In at least one embodiment of the present disclosure, the right-angle reflecting prism may be a single-row multi-path reflecting prism. That is, a plurality of curve reflecting surfaces in a single row are provided on an oblique surface of the prism. As shown in Fig. 6, mark 62 marks a locating guide pin hole, and mark 61 marks a curve reflecting surface. Correspondingly, the mobile optical fibre connector fixed to the single-row multi-path reflecting prism is a single-row multi-path mobile optical fibre connector. That is, the mobile optical fibre connector is a mobile optical fibre connector including a plurality of optical fibre coupling tubes in a row. Thus, multiple paths of rays in a single row can be reflected simultaneously.

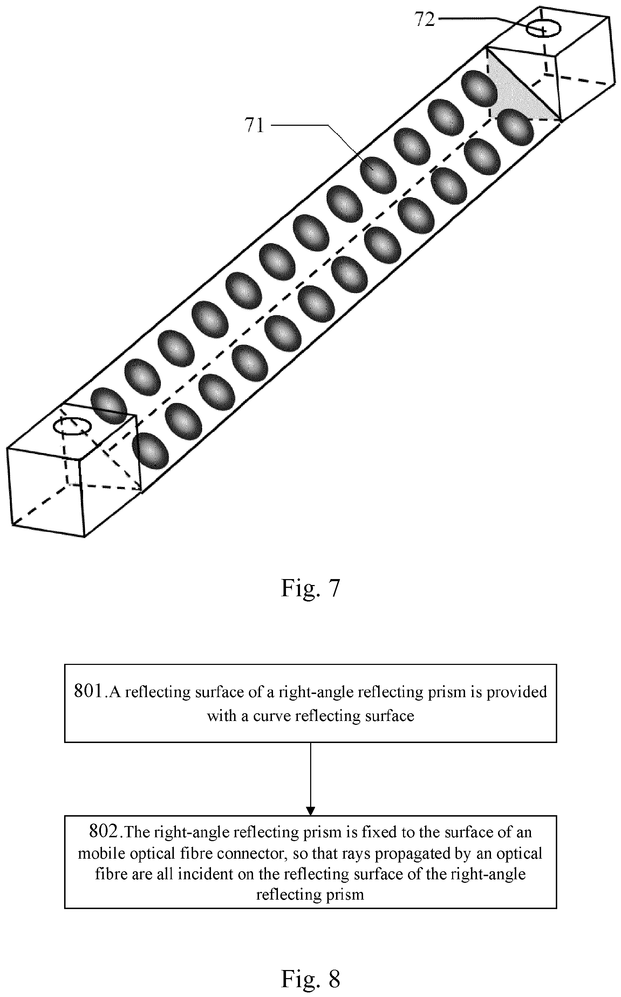

In at least one embodiment of the present disclosure, the right-angle reflecting prism may be a multi-row multi-path reflecting prism. That is, a plurality of rows of curve reflecting surfaces are provided on the oblique surface of the prism. Each row includes a plurality of curve reflecting surfaces. As shown in Fig. 7, a mark 72 marks a locating guide pin hole, and a mark 71 marks a curve reflecting surface. The mobile optical fibre connector fixed to the multi-row multi-path reflecting prism is a multi-row multi-path mobile optical fibre connector. That is, the mobile optical fibre connector is a mobile optical fibre connector including a plurality of rows of optical fibre coupling tubes, each row including a plurality of optical fibre coupling tubes. Thus, multiple rows and multiple paths of rays can be reflected simultaneously.

According to at least one embodiment of the present disclosure, a method for manufacturing an optical coupling device is provided. However the method is not part of the claimed invention. Fig. 8 shows a flowchart of the manufacturing method, and the manufacturing method includes the steps as follows.

Step 801: A reflecting surface of a right-angle reflecting prism is provided with a curve reflecting surface.

Here, the right-angle reflecting prism may be made by adopting an optical polishing technology, a central position and interval of the right-angle reflecting prism is identical to a central position and interval of an optical fibre coupling tube in an mobile optical fibre connector to be fixed to the right-angle reflecting prism; and a diameter and position of a locating guide pin hole in the right-angle reflecting prism is matched with a diameter and position of a locating guide pin hole in the mobile optical fibre connector to be fixed to the right-angle reflecting prism, thereby better connecting the mobile optical fibre connector to the right-angle reflecting prism via a locating guide pin.

In an example embodiment, a central position and interval of the provided curve reflecting surface are identical to a central position and interval of the optical fibre coupling tube in the mobile optical fibre connector to be fixed to the right-angle reflecting prism. A curvature of the curve reflecting surface may be designed according to a value of an aperture parameter of an optical fibre, and the curve reflecting surface has a gathering function for light beams according to a principle of optical reflection. Thus, the curvature of the curve reflecting surface of the right-angle reflecting prism is necessary to be designed to ensure that rays incident to the curve reflecting surface from the optical fibre at a maximum angle is gathered by the curve reflecting surface and then reflected in parallel; and a surface type of the reflecting surface optionally includes (but not limited to): a circular arc surface, a paraboloid and the like. According to a designed curve structure, the reflecting surface is processed on the right-angle reflecting prism by using an ultraviolet laser ablation process, a carbon dioxide laser hot-melting process, a mechanical grinding process or an ultrasonic grinding process.

Wherein, the curve reflecting surface may be coated with a film in a vacuum manner to obtain a total reflection curve surface; and specifically, the coated film may be a gold thin film, a silver thin film or other metal thin films, or may be other medium thin films.

Step 802: The right-angle reflecting prism is fixed to the surface of the mobile optical fibre connector, so that rays propagated by the optical fibre are all exactly incident on the curve reflecting surface of the right-angle reflecting prism.

In an example embodiment, locating guide pin holes in the right-angle reflecting prism manufactured in Step 801 and the mobile optical fibre connector are connected via a locating guide pin. In addition, the right-angle reflecting prism is fixed to the surface of the mobile optical fibre connector via a ultraviolet glue; and specifically, the ultraviolet glue may be applied to a joint between the locating guide pin and the right-angle reflecting prism and a joint between the locating guide pin and the mobile optical fibre connector; or can be applied to an area, connected to the mobile optical fibre connector, at an edge of the prism.

It is important to note that the sequence numbers of the above steps are merely intended to distinguish different steps and do not limit the sequence of the steps. When all steps are executed, there is not a strict sequence.

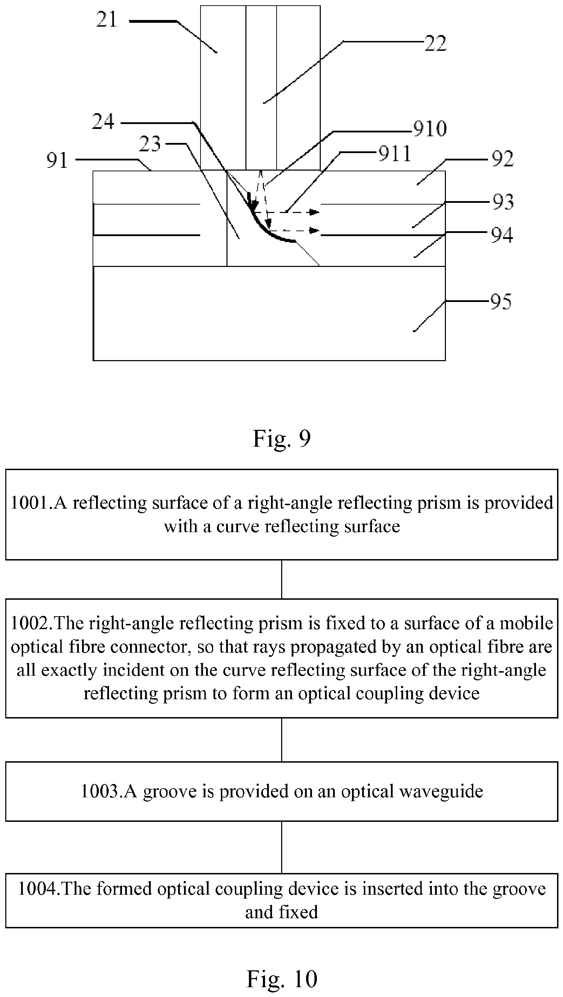

According to at least one embodiment of the present disclosure, an optical coupling unit is provided. As shown in Fig. 9, the optical coupling unit includes the optical coupling device and an optical waveguide 91. The optical coupling device is vertically inserted into the optical waveguide 91, so that rays reflected by a curve reflecting surface in the optical coupling device are incident into the optical waveguide 91 and propagated.

As shown in Fig. 9, the optical waveguide 91 includes a planar optical waveguide substrate 95, a lower optical waveguide cladding material 94, an optical waveguide core material 93 and an upper optical waveguide cladding material 92. The optical coupling device being vertically inserted into the optical waveguide 91 refers to that: a groove is provided at a position above the planar optical waveguide substrate 95 in the optical waveguide 91, so that the right-angle reflecting prism 23 in the optical coupling device is vertically inserted into the groove. The size of the groove is required to be greater than the size of the right-angle reflecting prism. That is, the entire right-angle reflecting prism 23 can be put into the groove.

In an example embodiment, the length of the optical waveguide may be selected according to actual circuit requirements. The type of the optical waveguide may be selected according to the type of the right-angle reflecting prism in the optical coupling device. Specifically, when the right-angle reflecting prism is a double-path reflecting prism, the optical waveguide is selected as a double-path optical waveguide. Thus, when the optical coupling device is vertically inserted into the optical waveguide, a two-path optical fibre and a two-path optical waveguide may be aligned, thereby achieving vertical optical coupling of a double-channel optical fibre and the optical waveguide. When the right-angle reflecting prism is a single-row multi-path reflecting prism, the optical waveguide is selected as a single-row multi-path optical waveguide. Thus, when the optical coupling device is vertically inserted into the optical waveguide, a single-row multi-path optical fibre and a single-row multi-path optical waveguide may be aligned, thereby achieving vertical optical coupling of the single-row multi-path optical fibre and the optical waveguide. When the right-angle reflecting prism is a double-row multi-path reflecting prism, the optical waveguide is selected as a double-row multi-path optical waveguide. Thus, when the optical coupling device is vertically inserted into the optical waveguide, a double-row multi-path optical fibre and a double-row multi-path optical waveguide may be aligned, thereby achieving vertical optical coupling of the double-row multi-path optical fibre and the optical waveguide.

In an example embodiment, a curvature of the curve reflecting surface 24 of the right-angle reflecting prism 23 in the optical coupling device may be designed according to a value of an aperture parameter of the optical fibre and a value of an aperture parameter of the optical waveguide, and the curve surface has a gathering function for light beams according to a principle of optical reflection. Thus, the curvature of the reflecting surface 24 of the right-angle reflecting prism 23 is necessary to be designed to ensure that after the rays incident to the curve reflecting surface 24 from the optical fibre at a maximum angle is gathered by the curve reflecting surface 24, an angle of reflected ray is smaller than an angle corresponding to the value of an aperture parameter of the optical waveguide, that is, there is no loss of light energy. The surface type of the curve reflecting surface optionally includes, but not limited to, a circular arc surface, a paraboloid and the like.

As shown in Fig. 9, in the optical coupling unit provided according to at least one embodiment of the present disclosure, after incident rays 910 transmitted by the optical fibre are totally reflected by the curve reflecting surface 24 of the right-angle reflecting prism, parallel reflected lights 211 will be obtained due to the gathering function, and the parallel emergent lights 211 are injected into the optical waveguide and is propagated via the optical waveguide. Thus, an optical loss can be greatly reduced, thereby achieving high-efficient vertical optical coupling between the optical fibre and the optical waveguide.

According to at least one embodiment of the present disclosure, a method for manufacturing an optical coupling unit is provided. However the method is not part of the claimed invention. As shown in Fig. 10, the method includes the steps as follows.

1001: A reflecting surface of a right-angle reflecting prism is provided with a curve reflecting surface.

In an example embodiment, the right-angle reflecting prism may be made by adopting an optical polishing technology, and a locating guide pin hole is provided on the right-angle reflecting prism, so that a diameter and position of the locating guide pin hole is matched with a diameter and position of a locating guide pin hole in an mobile optical fibre connector.

The reflecting surface of the right-angle reflecting prism is provided with the curve reflecting surface, so that a central position and interval of the provided curve reflecting surface correspond to a central position and interval of an optical fibre coupling tube in the mobile optical fibre connector to be fixed to the right-angle reflecting prism.

A curvature and surface type of the curve reflecting surface are determined so as to determine a curve reflecting surface structure.

In an example embodiment, the curvature of the curve reflecting surface may be designed according to a value of an aperture parameter of the mobile optical fibre connector and a value of an aperture parameter of an optical waveguide, and specifically, the curve surface has a gathering function for light beams according to a principle of optical reflection. Thus, the curvature of the reflecting surface of the right-angle reflecting prism is necessary to be designed to ensure that after rays incident to the right-angle reflecting prism from an optical fibre at a maximum angle are gathered by the curve reflecting surface, an angle of reflection into the optical waveguide is smaller than an angle corresponding to a value of an aperture parameter of the optical waveguide, that is, there is no loss of light energy. The surface type of the curve reflecting surface optionally includes, but not limited to, a circular arc surface, a paraboloid and the like.

According to the designed curve structure, the reflecting surface is processed on the right-angle reflecting prism by using an ultraviolet laser ablation process, a carbon dioxide laser hot-melting process, a mechanical grinding process or an ultrasonic grinding process.

Wherein, the curve reflecting surface may be coated with a film in a vacuum manner to obtain a total reflection curve surface; and specifically, the curve reflecting surface may be coated with a gold thin film, a silver thin film or other metal thin films, or can be coated with other medium thin films.

Step 1002: The right-angle reflecting prism is fixed to the surface of the mobile optical fibre connector, so that rays propagated by the optical fibre are all exactly incident on the curve reflecting surface of the right-angle reflecting prism to form an optical coupling device.

In an example embodiment, locating guide pin holes matched with the right-angle reflecting prism and the mobile optical fibre connector are connected via a locating guide pin. In addition, the right-angle reflecting prism is fixed to the surface of the mobile optical fibre connector via a ultraviolet glue; and specifically, the ultraviolet glue may be applied to a joint between the guide pin and the reflecting prism and a joint between the guide pin and the mobile optical fibre connector; or may be applied to an area, connected to the mobile optical fibre connector, at an edge of the prism.

Step 1003: A groove is provided on the optical waveguide.

In an example embodiment, the groove being provided on the optical waveguide includes that: a groove is provided at a position above a planar optical waveguide substrate in the optical waveguide by utilizing ultraviolet laser on the basis of a laser ablation technology. The size of the groove is greater than or equal to the size of the right-angle reflecting prism. That is, the entire right-angle reflecting prism can be put into the groove.

Step 1004: The optical coupling device formed in Step 1002 is inserted into the groove provided in Step 1003 and fixed.

Fixing may be performed in multiple modes, including, but not limited to, adhesion fixing via ultraviolet glue. By inserting and fixing the optical coupling device into the groove of the optical waveguide, optical vertical coupling can be achieved.

It is important to note that the sequence numbers of the above steps are merely intended to distinguish different steps and do not limit the sequence of the steps. When all steps are executed, there is not a strict sequence.

## Claims

1. An optical coupling device, comprising: a right-angle reflecting prism (23) and an mobile optical fibre connector (21), wherein
a reflecting surface of the right-angle reflecting prism (23) is provided with a curve reflecting surface (24), the curve reflecting surface (24) being used for gathering and reflecting rays propagated by an optical fibre of a predetermined numerical aperture; and
the mobile optical fibre connector (21) is fixed to the right-angle reflecting prism (23), to make the rays propagated by the optical fibre being all incident on the curve reflecting surface (24) of the right-angle reflecting prism (23) and totally reflected by the curve reflecting surface in a parallel light;
**characterized in that**
a diameter and position of a locating guide pin hole (42, 52, 62, 72) of the right-angle reflecting prism (23) correspond to a diameter and position of a locating guide pin hole of the mobile optical fibre connector (21);
wherein the mobile optical fibre connector (21) is connected to the right-angle reflecting prism (23) via a locating guide pin, and the locating guide pin is connected to the locating guide pin hole in the right-angle reflecting prism (23) and the corresponding locating guide pin hole in the mobile optical fibre connector (21) respectively; and
the right-angle reflecting prism (23) is fixed to a surface of the mobile optical fibre connector (21) via ultraviolet glue, and the ultraviolet glue is applied to a joint between the locating guide pin and the right-angle reflecting prism (23), and a joint between the locating guide pin and the mobile optical fibre connector (21); or applied to an area, connected to the mobile optical fibre connector (21), at an edge of the right-angle reflecting prism (23).

2. The optical coupling device as claimed in claim 1, wherein when a type of the right-angle reflecting prism (23) of the optical coupling device is a single-path reflecting prism, a double-path reflecting prism, a single-row multi-path reflecting prism or a double-row multi-path reflecting prism in sequence, a type of the mobile optical fibre connector (21) used for fixing the right-angle reflecting prism (23) is a single-row mobile optical fibre connector (21), a double-path mobile optical fibre connector (21), a single-row multi-path mobile optical fibre connector (21) or a double-row multi-path mobile optical fibre connector (21) in sequence, wherein the double-path reflecting prism refers to a reflecting prism which provided with two curve reflecting surfaces on the oblique surface of the right-angle reflecting prism, the single-row multi-path reflecting prism refers to a reflecting prism which provided with a plurality of curve reflecting surfaces in a single row on the oblique surface of the prism, the double-row multi-path reflecting prism refers to a reflecting prism refers to a reflecting prism which provided with two rows of curve reflecting surfaces on the oblique surface of the prism.

3. An optical coupling unit, comprising an optical waveguide (91) and the optical coupling device as claimed in any one of claims 1 to 5, wherein the optical coupling device is provided being vertically inserted into the optical waveguide (91), to make rays reflected by the curve reflecting surface (24) on the right-angle reflecting prism (23) in the optical coupling device being incident in the optical waveguide (91) and propagated, wherein the optical coupling device being vertically inserted into the optical waveguide (91) comprises: a groove being provided at a position above a planar optical waveguide (91) substrate in the optical waveguide (91), the right-angle reflecting prism (23) in the optical coupling device being vertically inserted into the groove, and a size of the groove being greater than or equal to a size of the right-angle reflecting prism (23).

4. The optical coupling unit as claimed in claim 3, wherein when a type of the right-angle reflecting prism (23) in the optical coupling device is a single-path reflecting prism, a double-path reflecting prism, a single-row multi-path reflecting prism or a double-row multi-path reflecting prism in sequence, a type of the optical waveguide (91) is a single-path optical waveguide (91), a double-path optical waveguide (91), a single-row multi-path optical waveguide (91) or a double-row multi-path optical waveguide (91) in sequence, wherein the double-path reflecting prism refers to a reflecting prism which provided with two curve reflecting surfaces on the oblique surface of the right-angle reflecting prism, the single-row multi-path reflecting prism refers to a reflecting prism which provided with a plurality of curve reflecting surfaces in a single row on the oblique surface of the prism, the double-row multi-path reflecting prism refers to a reflecting prism refers to a reflecting prism which provided with two rows of curve reflecting surfaces on the oblique surface of the prism.

## Patentansprüche

1. Optische Kopplungsvorrichtung, umfassend: ein rechtwinkliges Reflexionsprisma (23) und einen beweglichen Lichtleiteranschluss (21), wobei
eine reflektierende Oberfläche des rechtwinkligen Reflexionsprismas (23) mit einer gekrümmten reflektierenden Oberfläche (24) versehen ist, wobei die gekrümmte reflektierende Oberfläche (24) zum Sammeln und Reflektieren von Strahlen verwendet wird, die durch einen Lichtleiter mit einer zuvor bestimmten numerischen Apertur ausgebreitet werden; und
der bewegliche Lichtleiteranschluss (21) an dem rechtwinkligen Reflexionsprisma (23) befestigt ist, um dafür zu sorgen, dass die durch den Lichtleiter ausgebreiteten Strahlen alle auf die gekrümmte reflektierenden Oberfläche (24) des rechtwinkligen Reflexionsprismas (23) einfallen und durch die der gekrümmten reflektierende Oberfläche in einem parallelen Licht vollständig reflektiert werden;
**dadurch gekennzeichnet, dass** ein Durchmesser und eine Position eines Ortungsführungsstiftlochs (42, 52, 62, 72) des rechtwinkligen Reflexionsprismas (23) einem Durchmesser und einer Position eines Ortungsführungsstiftlochs des mobilen Lichtleiteranschlusses (21) entsprechen;
wobei der mobile Lichtleiteranschluss (21) mit dem rechtwinkligen Reflexionsprisma (23) über einen Ortungsführungsstift verbunden ist und der Ortungsführungsstift mit dem Ortungsführungsstiftloch in dem rechtwinkligen Reflexionsprisma (23) beziehungsweise dem entsprechenden Ortungsführungsstiftloch in dem mobilen Lichtleiteranschluss (21) verbunden ist; und
das rechtwinklige Reflexionsprisma (23) an einer Oberfläche des mobilen Lichtleiteranschlusses (21) mittels Ultraviolettkleber befestigt ist, und der Ultraviolettkleber auf eine Verbindung zwischen dem Ortungsführungsstift und dem rechtwinkligen Reflexionsprisma (23) und auf eine Verbindung zwischen dem Ortungsführungsstift und dem mobilen Lichtleiteranschluss (21) aufgetragen ist; oder auf einen Bereich aufgebracht ist, der mit dem mobilen Lichtleiteranschluss (21) an einer Kante des rechtwinklig Reflexionsprismas (23) verbunden ist.

2. Optische Kopplungsvorrichtung nach Anspruch 1, wobei, wenn ein Typ des rechtwinkligen Reflexionsprismas (23) der optischen Kopplungsvorrichtung ein einwegiges Reflexionsprisma, ein doppelwegiges Reflexionsprisma, ein einreihiges mehrwegiges Reflexionsprisma oder ein doppelreihiges mehrwegiges Reflexionsprisma in Folge ist, ein Typ des beweglichen Lichtleiteranschlusses (21), der zum Befestigen des rechtwinkligen Reflexionsprismas (23) verwendet wird, ein einreihiger beweglicher Lichtleiteranschluss (21), ein doppelwegiger beweglicher Lichtleiteranschluss (21), ein einreihiger mehrwegiger beweglicher Lichtleiteranschluss (21) oder ein doppelreihiger mehrwegiger beweglicher Lichtleiteranschluss (21) in Folge ist, wobei das doppelwegige Reflexionsprisma sich auf ein Reflexionsprisma bezieht, das mit zwei gekrümmten reflektierenden Oberflächen auf der schrägen Oberfläche des rechtwinkligen Reflexionsprismas versehen ist, das einreihige mehrwegige Reflexionsprisma sich auf ein Reflexionsprisma bezieht, das mit einer Vielzahl von gekrümmten reflektierenden Oberflächen in einer einzigen Reihe auf der schrägen Oberfläche des Prismas versehen ist, das doppelreihige mehrwegige Reflexprisma sich auf ein Reflexionsprisma bezieht, sich auf ein Reflexionsprisma bezieht, das mit zwei Reihen gekrümmter reflektierender Oberflächen auf der schrägen Oberfläche des Prismas versehen ist.

3. Optische Kopplungseinheit, umfassend einen optischen Wellenleiter (91) und die optische Kopplungsvorrichtung nach einem der Ansprüche 1 bis 5, wobei die optische Kopplungsvorrichtung in den optischen Wellenleiter (91) vertikal eingesetzt ist, um dafür zu sorgen, dass Strahlen, die durch die gekrümmten reflektierenden Oberfläche (24) auf dem rechtwinkligen Reflexionsprisma (23) in der optischen Kopplungsvorrichtung reflektiert werden, in den optischen Wellenleiter (91) einfallen und ausgebreitet werden, wobei die optische Kopplungsvorrichtung, die in den optischen Wellenleiter (91) vertikal eingesetzt ist, umfasst: eine Nut, die an einer Position über einem ebenen Substrat des optischen Wellenleiters (91) in dem optischen Wellenleiter (91) bereitgestellt ist, wobei das rechtwinklige Reflexionsprisma (23) in der optischen Kopplungsvorrichtung in die Nut vertikal eingesetzt ist, und wobei eine Größe der Nut größer als oder gleich einer Größe des rechtwinkligen Reflexionsprismas (23) ist.

4. Optische Kopplungseinheit nach Anspruch 3, wobei, wenn ein Typ des rechtwinkligen Reflexionsprismas (23) in der optischen Kopplungsvorrichtung ein einwegiges Reflexionsprisma, ein doppelwegiges Reflexionsprisma, ein einreihiges mehrwegiges Reflexionsprisma oder ein doppelreihiges mehrwegiges Reflexionsprisma in Folge ist, ein Typ des optischen Wellenleiters (91) ein einwegiger optischer Wellenleiter (91), ein doppelwegiger optischer Wellenleiter (91), ein einreihiger mehrwegiger optischer Wellenleiter (91) oder ein doppelreihiger mehrwegiger optischer Wellenleiter (91) in Folge ist, wobei das doppelwegige Reflexionsprisma sich auf ein Reflexionsprisma bezieht, das mit zwei gekrümmten reflektierenden Oberflächen auf der schrägen Oberfläche des rechtwinkligen Reflexionsprismas versehen ist, das einreihige mehrwegige Reflexionsprisma sich auf ein Reflexionsprisma bezieht, das mit einer Vielzahl von gekrümmten reflektierenden Oberflächen in einer einzelnen Reihe auf der schrägen Oberfläche des Prismas versehen ist, wobei das doppelreihige mehrwegige Reflexionsprisma sich auf ein Reflexionsprisma bezieht, sich auf ein Reflexionsprisma bezieht, das mit zwei Reihen gekrümmter reflektierender Oberflächen auf der schrägen Oberfläche des Prismas versehen ist.

## Revendications

1. Dispositif de couplage optique, comprenant : un prisme réfléchissant à angle droit (23) et un connecteur de fibre optique mobile (21), dans lequel
une surface réfléchissante du prisme réfléchissant à angle droit (23) est pourvue d'une surface réfléchissante courbée (24), la surface réfléchissante courbée (24) étant utilisée pour le rassemblement et la réflexion de rayons propagés par une fibre optique d'une ouverture numérique prédéterminée ; et
le connecteur de fibre optique mobile (21) est fixé au prisme réfléchissant à angle droit (23), pour amener les rayons propagés par la fibre optique à être tous incidents sur la surface réfléchissante courbée (24) du prisme réfléchissant à angle droit (23) et réfléchis totalement par la surface réfléchissante courbée dans une lumière parallèle ;
**caractérisé en ce qu'**un diamètre et une position d'un trou de tige de guidage de localisation (42, 52, 62, 72) du prisme réfléchissant à angle droit (23) correspondent à un diamètre et à une position d'un trou de tige de guidage de localisation du connecteur de fibre optique mobile (21) ;
dans lequel le connecteur de fibre optique mobile (21) est relié au prisme réfléchissant à angle droit (23) par l'intermédiaire d'une tige de guidage de localisation, et la tige de guidage de localisation est reliée au trou de tige de guidage de localisation dans le prisme réfléchissant à angle droit (23) et au trou de tige de guidage de localisation correspondant dans le connecteur de fibre optique mobile (21) respectivement ; et
le prisme réfléchissant à angle droit (23) est fixé à une surface du connecteur de fibre optique mobile (21) par l'intermédiaire de colle ultraviolette, et la colle ultraviolette est appliquée à un joint entre la tige de guidage de localisation et le prisme réfléchissant à angle droit (23), et à un joint entre la tige de guidage de localisation et le connecteur de fibre optique mobile (21) ; ou appliquée à une zone, reliée au connecteur de fibre optique mobile (21), au niveau d'un bord du prisme réfléchissant à angle droit (23).

2. Dispositif de couplage optique selon la revendication 1, dans lequel lorsqu'un type du prisme réfléchissant à angle droit (23) du dispositif de couplage optique est un prisme réfléchissant à trajet unique, un prisme réfléchissant à trajet double, un prisme réfléchissant à trajets multiples à rangée unique ou un prisme réfléchissant à trajets multiples à double rangée en séquence, un type du connecteur de fibre optique mobile (21) servant à fixer le prisme réfléchissant à angle droit (23) est un connecteur de fibre optique mobile à rangée unique (21), un connecteur de fibre optique mobile à trajet double (21), un connecteur de fibre optique mobile à trajets multiples à rangée unique (21) ou un connecteur de fibre optique mobile à trajets multiples à double rangée (21) en séquence, dans lequel le prisme réfléchissant à trajet double fait référence à un prisme réfléchissant qui est pourvu de deux surfaces réfléchissantes courbées sur la surface oblique du prisme réfléchissant à angle droit, le prisme réfléchissant à trajets multiples à rangée unique fait référence à un prisme réfléchissant qui est pourvu d'une pluralité de surfaces réfléchissantes courbées dans une rangée unique sur la surface oblique du prisme, le prisme réfléchissant à trajets multiples à double rangée fait référence à un prisme réfléchissant fait référence à un prisme réfléchissant qui est pourvu de deux rangées de surfaces réfléchissantes courbées sur la surface oblique du prisme.

3. Unité de couplage optique, comprenant un guide d'ondes optique (91) et le dispositif de couplage optique selon l'une quelconque des revendications 1 à 5, dans laquelle le dispositif de couplage optique est prévu pour être inséré verticalement dans le guide d'ondes optique (91), pour amener des rayons réfléchis par la surface réfléchissante courbée (24) sur le prisme réfléchissant à angle droit (23) dans le dispositif de couplage optique à être incidents dans le guide d'ondes optique (91) et propagés, dans laquelle le dispositif de couplage optique étant inséré verticalement dans le guide d'ondes optique (91) comprend : une rainure étant fournie au niveau d'une position au-dessus d'un substrat de guide d'ondes optique (91) plan dans le guide d'ondes optique (91), le prisme réfléchissant à angle droit (23) dans le dispositif de couplage optique étant inséré verticalement dans la rainure, et une taille de la rainure étant supérieure ou égale à une taille du prisme réfléchissant à angle droit (23).

4. Unité de couplage optique selon la revendication 3, dans laquelle lorsqu'un type du prisme réfléchissant à angle droit (23) dans le dispositif de couplage optique est un prisme réfléchissant à trajet unique, un prisme réfléchissant à trajet double, un prisme réfléchissant à trajets multiples à rangée unique ou un prisme réfléchissant à trajets multiples à double rangée en séquence, un type du guide d'ondes optique (91) est un guide d'ondes optique (91) à trajet unique, un guide d'ondes optique (91) à trajet double, un guide d'ondes optique (91) à trajets multiples à rangée unique ou un guide d'ondes optique (91) à trajets multiples à double rangée en séquence, dans laquelle le prisme réfléchissant à trajet double fait référence à un prisme réfléchissant qui est pourvu de deux surfaces réfléchissantes courbées sur la surface oblique du prisme réfléchissant à angle droit, le prisme réfléchissant à trajets multiples à rangée unique fait référence à un prisme réfléchissant qui est pourvu d'une pluralité de surfaces réfléchissantes courbées dans une rangée unique sur la surface oblique du prisme, le prisme réfléchissant à trajets multiples à double rangée fait référence à un prisme réfléchissant fait référence à un prisme réfléchissant qui est pourvu de deux rangées de surfaces réfléchissantes courbées sur la surface oblique du prisme.
